# EUROPEAN PATENT APPLICATION

(11) **EP 3 540 415 A2**
(43) Date of publication of application: **18.09.2019**
(21) Application number: 19162700.9
(22) Date of filing: 14.03.2019
(51) Int. Cl.: G01N 23/04

(54) **MEASUREMENT DEVICE USING X-RAY REFLECTION**

(30) Priority: 15.03.2018 JP 2018047822
(71) Applicant: Earthnix-M, Inc., Chiyoda-ku Tokyo 101-0021 (JP)
(72) Inventor: UCHIDA, Hiroshi, Tokyo (JP); EMURA, Takashi, Tokyo (JP); OGAWA, Junichi, Tokyo (JP); NAKANISHI, Ryusuke, Tokyo (JP)
(74) Representative: Strehl Schübel-Hopf & Partner

(57) **Abstract**

An object is to provide a measurement device using X-ray reflection that can reduce space required for measurement, simplify the setting procedure, and improve measurement accuracy. The measurement device using X-ray reflection includes an X-ray tube 1 configured to emit an X-ray beam, a detector 7 configured to detect a reflected beam of the X-ray beam, a rotational driving unit configured to rotate the X-ray tube 1 and the detector 7, a calibration plate 22 configured to reflect the X-ray beam emitted from the X-ray tube 1 toward the detector 7, and a control unit configured to perform a predetermined computation. The control unit controls the rotational driving unit to direct the X-ray tube 1 and the detector 7 toward a measurement object 21, causes the detector 7 to detect a reflected beam of an X-ray beam emitted from the X-ray tube 1 toward the measurement object 21, directs the X-ray tube 1 and the detector 7 toward the calibration plate 22, causes the detector 7 to detect a reflected beam of an X-ray beam emitted from the X-ray tube 1 toward the calibration plate 22, and determines a measurement value on the measurement object 21 by a computation using a signal representing the reflected beam from the measurement object 21 and a signal representing the reflected beam from the calibration plate 22.

## Description

### 1. Field of the Invention

The present invention relates to a measurement device using X-ray reflection that irradiates a measurement object with an X-ray beam and detects the reflected X-ray beam.

Measurement devices that transmit, for example, an X-ray, β-ray, or γ-ray beam through a measurement object are used to measure the thickness of a planar portion of a resin film, paper material, pulp, board, or the like.

Such a transmission measurement device is configured to cause, for example, an X-ray irradiation unit to irradiate a measurement object (sample) with an X-ray beam, and cause a detecting unit to detect the X-ray beam transmitted through the measurement object. This configuration enables, for example, acquisition of a transmissive image and observation of cellular activities (see, e.g., Patent Literature 1).

### 2. Description of the Related Art

[PTL] Patent Literature 1: Japanese Unexamined Patent Application Publication No. 2015-90311

### SUMMARY OF THE INVENTION

When a transmission measurement device, such as that described above, measures, for example, the thickness of a coating applied to a measurement object in the application process during manufacture of the measurement object, the X-ray irradiation unit and the detecting unit are contaminated with the coating agent. This makes it difficult to achieve accurate measurement.

To perform calibration to improve the accuracy of measurement results, it is essential for the transmission measurement device to carry out X-ray irradiation and detection, with a measurement object removed from the measurement system. This requires a setting procedure involving many steps (items) for the measurement, and results in high running costs.

Examples of devices that have been used to measure moisture content in a block of material, a powder or granular material (such as flour or sand), wood chips, tea leaves, or the like include a transmission measurement device using microwaves, an infrared reflection measurement device (moisture meter), and a capacitive device.

Since the use (or microwave emission) of the microwave-based device is restricted to designated areas (or environments), it may not be possible to carry out measurements in a desired place.

Also, the infrared reflection moisture meter has a problem in that since it produces a different measurement result depending on, for example, the surface color of the measurement object, it is difficult to improve the accuracy and stability of measurement results.

The present invention has been made in view of the problems described above. An object of the present invention is to provide an Measurement device using X-ray reflection that can reduce space required for measurement, simplify the setting procedure, and improve measurement accuracy.

A measurement device using X-ray reflection according to the present invention includes an X-ray irradiation unit configured to emit an X-ray beam; an X-ray detection unit configured to detect a reflected beam of the X-ray beam and output a signal representing the reflected beam; a rotational driving unit configured to rotate the X-ray irradiation unit and the X-ray detection unit; a calibration plate disposed at a predetermined distance from the X-ray irradiation unit and the X-ray detection unit and configured to reflect the X-ray beam emitted from the X-ray irradiation unit toward the X-ray detection unit; and a control unit configured to control an operation of the X-ray irradiation unit and an operation of the rotational driving unit, acquire the signal representing the reflected beam detected by the X-ray detection unit, and perform a predetermined computation. The control unit controls the rotational driving unit to direct the X-ray irradiation unit and the X-ray detection unit toward a measurement object, causes the X-ray detection unit to detect a reflected beam of an X-ray beam emitted from the X-ray irradiation unit toward the measurement object, directs the X-ray irradiation unit and the X-ray detection unit toward the calibration plate, causes the X-ray detection unit to detect a reflected beam of an X-ray beam emitted from the X-ray irradiation unit toward the calibration plate, and determines a measurement value on the measurement object by a computation using a signal representing the reflected beam from the measurement object and a signal representing the reflected beam from the calibration plate.

The calibration plate is composed of a first calibration plate disposed along the trajectory of rotation of the X-ray irradiation unit and the X-ray detection unit and positioned, for example, opposite the measurement object; and a second calibration plate disposed along the trajectory of rotation of the X-ray irradiation unit and the X-ray detection unit, spaced from the first calibration plate, and formed of a material having an X-ray reflectivity different from the first calibration plate. The control unit performs a multipoint calibration on the computation for the signal representing the reflected beam from the measurement object, the multipoint calibration using a signal acquired from the X-ray detection unit and representing a reflected beam from the first calibration plate and a signal acquired from the X-ray detection unit and representing a reflected beam from the second calibration plate.

The measurement device using X-ray reflection further includes a movable mechanism configured to rotate or translate a plurality of calibration plates in accordance with control by the control unit. The control unit acquires, from the X-ray detection unit, signals representing reflected beams from the plurality of calibration plates moved by controlling the movable mechanism, and performs a multipoint calibration on the computation using the signal representing the reflected beam from the measurement object.

The measurement device using X-ray reflection further includes a moving mechanism configured to move the calibration plate in accordance with control by the control unit to change a distance between the calibration plate and the X-ray irradiation unit and the X-ray detection unit. The control unit controls the moving mechanism to adjust the distance between the calibration plate and the X-ray irradiation unit and the X-ray detection unit in such a manner that a signal representing a reflected beam suitable for the computation is output from the X-ray detection unit.

The X-ray irradiation unit outputs an X-ray beam with 30 keV or less.

The X-ray detection unit includes a first detection unit and a second detection unit arranged on both sides of an X-ray irradiation region of the X-ray irradiation unit. The X-ray irradiation unit emits X-ray beams in two directions to allow reflected beams from the measurement object or the calibration plate to enter the first detection unit and the second detection unit. The control unit is characterized in that it determines a measurement value on the measurement object using a signal output from the first detection unit and representing one reflected beam and a signal output from the second detection unit and representing the other reflected beam.

The measurement device using X-ray reflection is further characterized in that it includes an irradiation guide configured to guide an X-ray beam emitted from the X-ray irradiation unit in a predetermined direction.

The present invention can reduce space for installing components for performing X-ray irradiation and detection, and can carry out measurements with improved accuracy.

### BRIEF DESCRIPTION OF THE DRAWINGS

Fig. 1 is a diagram schematically illustrating a configuration of a measurement device using X-ray reflection according to a first embodiment of the present invention.
Fig. 2 is a diagram illustrating how a measurement object of powder or granular material is measured using the measurement device using X-ray reflection illustrated in Fig. 1.
Fig. 3 is a diagram schematically illustrating a configuration of a measurement device using X-ray reflection according to a second embodiment of the present invention.
Fig. 4 is a diagram schematically illustrating a configuration of a measurement device using X-ray reflection according to a third embodiment of the present invention.
Fig. 5 is a diagram schematically illustrating a configuration of a measurement device using X-ray reflection according to a fourth embodiment of the present invention.
Fig. 6 is a diagram schematically illustrating a configuration of a measurement device using X-ray reflection according to a fifth embodiment of the present invention.
Fig. 7 is a diagram schematically illustrating a configuration of a measurement device using X-ray reflection according to a sixth embodiment of the present invention.

### DESCRIPTION OF THE PREFERRED EMBODIMENTS

Embodiments of the present invention will now be described below on the basis of the drawings.

### (First Embodiment)

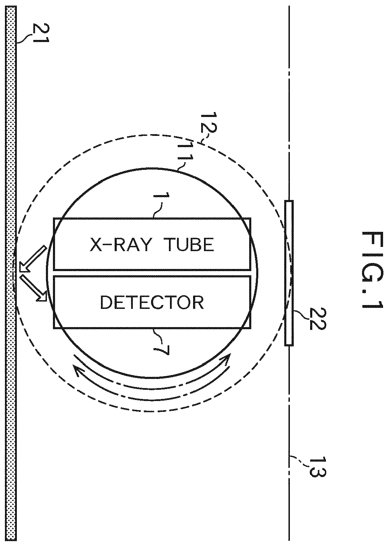

Fig. 1 is a diagram schematically illustrating a configuration of a measurement device using X-ray reflection according to a first embodiment of the present invention. In this diagram, an X-ray tube 1 (X-ray irradiation unit) and a detector 7 (X-ray detection unit) of the measurement device using X-ray reflection are placed near a measurement object 21, for example, a thin film-like measurement object.

In the measurement device using X-ray reflection illustrated, the X-ray tube 1 and the detector 7 are disposed side by side. Specifically, the X-ray tube 1 and the detector 7 are disposed in such a manner that an irradiation region of the X-ray tube 1 from which an X-ray beam is output and a detection region of the detector 7 onto which an X-ray beam is incident, are arranged side by side.

The X-ray tube 1 and the detector 7 are connected to a rotational driving unit (not shown) and configured to rotate together.

The X-ray tube 1 and the detector 7 are supported, for example, by a support mechanism (not shown) in such a manner that when they rotate together, a rotational plane 11 illustrated in Fig. 1 emerges as the rotational trajectory.

In other words, the X-ray tube 1 and the detector 7 are secured together and supported, for example, by the support mechanism in such a manner that they are rotatable about the rotation axis of the rotational plane 11. At the same time, the X-ray tube 1 and the detector 7 are connected to the rotational driving unit in such a manner that they are rotated by the rotational driving unit about the rotation axis in two directions.

Specifically, the rotational plane 11 represents the rotational trajectory of the irradiation region of the X-ray tube 1 and the detection region of the detector 7.

The measurement device using X-ray reflection illustrated in Fig. 1 includes a calibration plate 22. When the X-ray tube 1 and the detector 7 are placed near the measurement object 21, the calibration plate 22 is positioned opposite the measurement object 21, with the X-ray tube 1 and the detector 7 therebetween.

The calibration plate 22 is, for example, a flat plate formed of a material having a predetermined X-ray reflectivity serving as a reference for calibration. The calibration plate 22 is disposed on a tangent 13 to a peripheral circle 12 illustrated in Fig. 1. For example, the tangent 13 illustrated in Fig. 1 extends parallel to the surface of the measurement object 21, but the position at which the tangent touches the circumference of the peripheral circle 12 is not limited to any particular position.

The calibration plate 22 and other calibration plates (described below) may be formed of a film-like material, and do not necessarily need to be of a flat plate-like shape. Any of the calibration plates described herein is formed of a material having an appropriate X-ray reflectivity or the like, in accordance with the X-ray reflectivity (or reflection characteristics) of the measurement object 21.

The peripheral circle 12 is centered on the central axis (rotation axis) of the rotational plane 11. The gap between the circumference of the peripheral circle 12 and the rotational plane 11 represents the distance between the measurement object 21 and the X-ray tube 1 and the detector 7.

That is, the calibration plate 22 is configured and disposed in such a manner that the distance between the measurement object 21 and the irradiation region of the X-ray tube 1 and the detection region of the detector 7 measured when these regions face the measurement object 21 is equal to the distance between the calibration plate 22 and the irradiation region of the X-ray tube 1 and the detection region of the detector 7 measured after the X-ray tube 1 and the detector 7 rotate to allow these regions to face the calibration plate 22.

The measurement device using X-ray reflection illustrated in Fig. 1 is configured in such a manner that the tangent 13 or calibration plate 22 and the surface of the measurement object 21 are parallel and opposite each other, with the rotation center of the X-ray tube 1 and the detector 7 being a base point.

That is, the measurement device using X-ray reflection is configured in such a manner that the incident angle of an X-ray beam onto the measurement object 21 and the reflection angle of the reflected beam measured when the X-ray tube 1 and the detector 7 are positioned to face the measurement object 21 are equal to the incident angle of an X-ray beam onto the calibration plate 22 and the reflection angle of the reflected beam measured when the X-ray tube 1 and the detector 7 are positioned to face the calibration plate 22 (i.e., measured after the X-ray tube 1 and the detector 7 are rotated 180 degrees).

The X-ray tube 1 is, for example, connected to a control unit (not shown) and configured to output an X-ray beam with a predetermined energy intensity in accordance with a control signal from the control unit. For example, the X-ray tube 1 is configured to output an X-ray beam (soft X-ray beam) with 30 (keV) or less.

The detector 7 is, for example, connected to the control unit and configured to output, to the control unit, a signal representing the amplitude or intensity of an X-ray beam (reflected beam) incident on the detection region of the detector 7.

The rotational driving unit is, for example, connected to the control unit and configured in such a manner that the direction and speed of rotation and the amount of rotation are controlled by a control signal input thereto from the control unit.

The control unit is configured to control the operation of the X-ray tube 1 and the rotational driving unit, as described above, and perform a predetermined computation using, for example, a signal input thereto from the detector 7.

The operation will now be described.

To perform a measurement on the measurement object 21 using an X-ray beam, the control unit controls the rotational driving unit to direct, for example, the irradiation region of the X-ray tube 1 and the detection region of the detector 7 toward a predetermined portion (or measured region) of the measurement object 21. In this state, the control unit causes the X-ray tube 1 to emit an X-ray beam to allow a reflected beam of the X-ray beam reflected from the measurement object 21 to enter the detector 7.

The control unit then stores a signal output from the detector 7 and representing the reflected beam (i.e., data representing the intensity, amplitude, etc.) in storage means, such as its own memory.

Next, the control unit controls the rotational driving unit to direct the irradiation region of the X-ray tube 1 and the detection region of the detector 7 toward the calibration plate 22. In this state, the control unit causes the X-ray tube 1 to emit an X-ray beam to allow a reflected beam of the X-ray beam reflected from the calibration plate 22 to enter the detector 7.

The control unit then stores a signal output from the detector 7 and representing the reflected beam (i.e., data representing the intensity etc.) in storage means, such as its own memory.

Then, the control unit performs a predetermined computation using the data stored in the memory or the like, that is, the data representing the reflected beam from the measurement object 21 and the data representing the reflected beam from the calibration plate 22, to determine a measurement value on the measurement object 21, such as the thickness of the measurement object 21 having a plate-like or film-like shape.

The X-ray tube 1 and the detector 7 may be directed toward the calibration plate 22 first, so that the detection of the reflected beam from the calibration plate 22 is followed by the detection of the reflected beam from the measurement object 21.

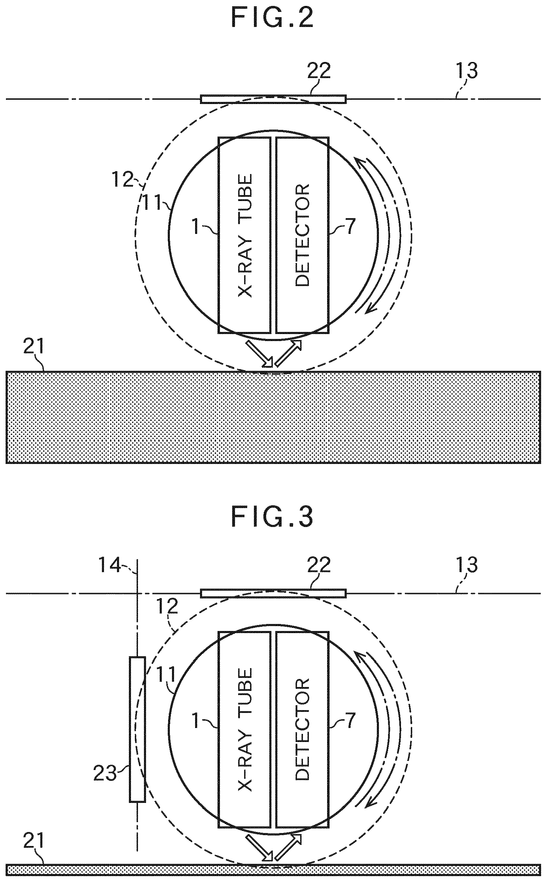

Fig. 2 is a diagram illustrating how the measurement object 21 of powder or granular material is measured using the measurement device using X-ray reflection illustrated in Fig. 1.

When a material is irradiated with an X-ray beam, the Compton-scattered beam partially returns toward the irradiation side.

In particular, when the measurement object 21 of powder or granular material illustrated in Fig. 2 is subjected to any type of measurement using an X-ray beam (e.g., measurement of the thickness of any layer, component analysis of an aggregated powdery material), a reflection position for reflecting the X-ray beam (e.g., the depth of the measurement object 21 in the thickness direction, the position of the measured layer in the stack to be measured) is determined beforehand in accordance with the type of measurement to be performed. Then, the incident angle of the X-ray beam onto the measurement object 21 or more specifically, the X-ray output (irradiation) angle of the X-ray tube 1, is set in advance in accordance with the reflection position described above. Also, the detector 7 is positioned in such a manner that it can detect a reflected beam of the X-ray beam (i.e., part of the Compton-scattered beam).

When the measurement object 21 of powder or granular material is irradiated with an X-ray beam to perform measurement of a predetermined content (internal structure or the like), the position of the calibration plate 22 is determined in accordance with the position for reflecting the X-ray beam (e.g., the depth of the measurement object 21 in the thickness direction).

Specifically, the calibration plate 22 is disposed and secured in such a manner that the distance between the calibration plate 22 and the irradiation region of the X-ray tube 1 and the detection region of the detector 7 measured when, for example, these regions face the calibration plate 22, is equal to the distance between the reflection position of the measurement object 21 for reflecting the X-ray beam and the irradiation region of the X-ray tube 1 and the detection region of the detector 7 measured when these regions face the measurement object 21; that is, the calibration plate 22 is disposed and secured on the circumference of the peripheral circle 12 illustrated in Fig. 2. Then, a reflected beam from the calibration plate 22 disposed as described above is detected, and a result of detection of a reflected beam from the measurement object 21 (i.e., a signal representing the reflected beam) is computed using the detected reflected beam from the calibration plate 22, so as to determine a predetermined measurement result.

### (Second Embodiment)

Fig. 3 is a diagram schematically illustrating a configuration of an measurement device using X-ray reflection according to a second embodiment of the present invention. In this diagram, as in Figs. 1 and 2, the X-ray tube 1 and the detector 7 of the measurement device using X-ray reflection are placed near the measurement object 21.

The measurement device using X-ray reflection illustrated in Fig. 3 has the same configuration as that illustrated in Fig. 1, except that it includes not only the calibration plate 22 (first calibration plate) but also an orthogonal calibration plate 23 (second calibration plate). An overlapping description of the same components as those of the measurement device using X-ray reflection illustrated in Fig. 1 will be omitted here.

In the measurement device using X-ray reflection illustrated in Fig. 3, the orthogonal calibration plate 23 is disposed on a tangent 14 orthogonal to the tangent 13 illustrated in Fig. 1. Like the tangent 13, the tangent 14 is tangent to the peripheral circle 12.

The orthogonal calibration plate 23 disposed on the circumference of the tangent 14 has, for example, the same surface shape as the calibration plate 22 and is thicker in plate thickness than the calibration plate 22. The orthogonal calibration plate 23 may be formed using a material having an X-ray reflectivity that can be used by the control unit in a predetermined computation for a reflected beam from the measurement object 21, and differs from the X-ray reflectivity of the material used to form the calibration plate 22.

When the X-ray tube 1 and the detector 7 positioned to face the measurement object 21 (or the calibration plate 22) are rotated, for example, either to the right or left, the orthogonal calibration plate 23 faces the irradiation region of the X-ray tube 1 and the detection region of the detector 7.

That is, the orthogonal calibration plate 23 is disposed in such a manner that the incident angle of an X-ray beam onto the orthogonal calibration plate 23 and the reflection angle of a reflected beam reflected from the orthogonal calibration plate 23 are equal to the incident angle and the reflection angle with respect to the calibration plate 22.

As in the case of the measurement device using X-ray reflection described using Figs. 1 and 2, the measuring operation of the measurement device using X-ray reflection illustrated in Fig. 3 involves, under control of the control unit, controlling the orientation of the X-ray tube 1 and the detector 7 (i.e., rotating the X-ray tube 1 and the detector 7 to face in an appropriate direction) and irradiating the measurement object 21 with an X-ray beam from the X-ray tube 1.

A reflected beam of the X-ray beam reflected from the measurement object 21 is detected by the detector 7, and a signal output from the detector 7 and representing the reflected beam is acquired by the control unit.

Also, the orientation of the X-ray tube 1 and the detector 7 is controlled (i.e., the X-ray tube 1 and detector 7 are rotated to face in an appropriate direction), the calibration plate 22 is irradiated with an X-ray beam from the X-ray tube 1, a reflected beam from the calibration plate 22 is detected by the detector 7, and a signal representing the reflected beam is input to the control unit.

Similarly, the orientation of the X-ray tube 1 and the detector 7 is controlled (i.e., the X-ray tube 1 and detector 7 are rotated to face in an appropriate direction), the orthogonal calibration plate 23 is irradiated with an X-ray beam from the X-ray tube 1, a reflected beam from the orthogonal calibration plate 23 is detected by the detector 7, and a signal representing the reflected beam is input to the control unit.

For the signal representing the reflected beam from the measurement object 21, the control unit performs a computation which involves a multipoint calibration using the signal representing the reflected beam from the calibration plate 22 and the signal representing the reflected beam from the orthogonal calibration plate 23 to determine a measurement value. The order in which the X-ray tube 1 and the detector 7 are appropriately rotated to irradiate the measurement object 21, the calibration plate 22, and the orthogonal calibration plate 23 with an X-ray beam, and the order in which the reflected beams from them are detected, are not limited to those described above.

### (Third Embodiment)

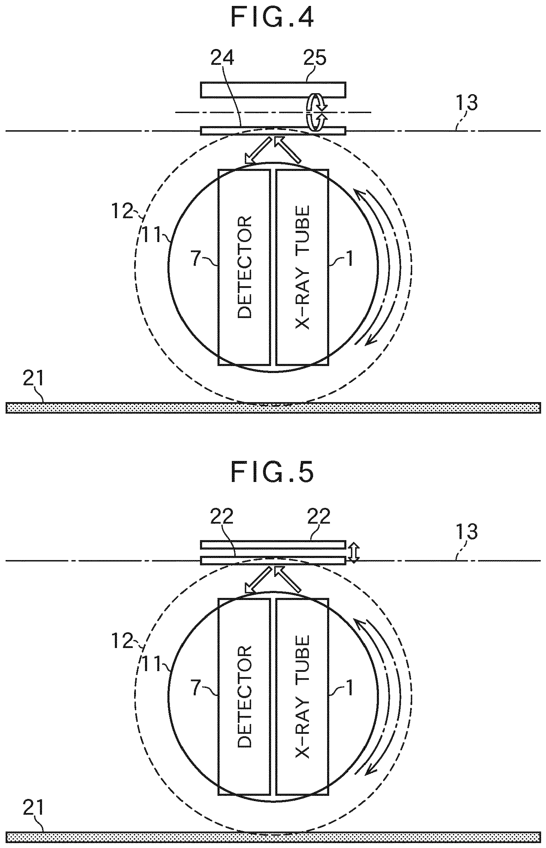

Fig. 4 is a diagram schematically illustrating a configuration of an measurement device using X-ray reflection according to a third embodiment of the present invention. In this diagram, as in Figs. 1 to 3, the X-ray tube 1 and the detector 7 of the measurement device using X-ray reflection are placed near the measurement object 21.

The measurement device using X-ray reflection illustrated in Fig. 4 has the same configuration as that illustrated in Fig. 1, except that it includes a movable calibration plate 24 and a movable calibration plate 25 instead of the calibration plate 22 of the Measurement device using X-ray reflection illustrated in Fig. 1. An overlapping description of the same components as those of the measurement device using X-ray reflection illustrated in Fig. 1 will be omitted here.

The movable calibration plate 24 is formed similarly, for example, to the calibration plate 22 illustrated in Fig. 1. The movable calibration plate 25 has the same surface shape as the movable calibration plate 24, but is thicker in plate thickness than the movable calibration plate 24 and has X-ray reflection characteristics (e.g., X-ray reflectivity) different from those of the movable calibration plate 24.

As illustrated in Fig. 4, the movable calibration plates 24 and 25 are disposed opposite the measurement object 21, with the X-ray tube 1 and the detector 7 therebetween. The movable calibration plates 24 and 25 are rotated or translated while being supported or secured, at this position, by a movable mechanism (not shown). The movable mechanism is configured in such a manner that its operation is controlled, for example, by a control signal output from the control unit.

The movable mechanism of the measurement device using X-ray reflection according to the third embodiment is configured also to be able to secure the movable calibration plate 24 and the movable calibration plate 25 in such a manner that the plate faces (surfaces) of the movable calibration plate 24 and movable calibration plate 25 do not face the X-ray irradiation region of the X-ray tube 1 and the X-ray detection region of the detector 7.

When the measurement object 21 is, for example, a flat board member or a membrane, the control unit controls the movable mechanism in such a manner that the position of the movable calibration plate 24 is set in accordance with the surface shape of the region of the measurement object 21 at which an X-ray beam is reflected, and that the movable calibration plate 24 is moved to the set position.

The position of the movable calibration plate 24 is set, for example, in such a manner that the incident angle of an X-ray beam from the X-ray tube 1 onto the measurement object 21 and the reflection angle of a reflected beam from the surface of the measurement object 21 toward the detector 7 are equal to the incident angle onto the movable calibration plate 24 and the reflection angle from the movable calibration plate 24.

Specifically, for example, the distance between the movable calibration plate 24 and the X-ray tube 1 and the detector 7, and the angle of tilt of the movable calibration plate 24 from the position opposite the X-ray tube 1 and the detector 7, are set.

More than one position of the movable calibration plate 24 may be set, so as to allow detection of a reflected beam at each position.

The control unit controls the movable mechanism to move the movable calibration plate 24 and secure it at a first distance or tilt angle that is set in accordance with the surface shape or internal structure of the measurement object 21.

Next, with the movable calibration plate 24 secured at the first distance or tilt angle, the control unit causes the X-ray tube 1 to irradiate the movable calibration plate 24 with an X-ray beam and causes the detector 7 to detect a reflected beam from the movable calibration plate 24. The control unit acquires a signal representing the reflected beam detected at the first distance or tilt angle, and stores the acquired signal in its own memory or the like. Then, the control unit controls the movable mechanism to move the movable calibration plate 24 and secure it at a second distance or tilt angle.

With the movable calibration plate 24 secured at the second distance or tilt angle, the control unit causes the X-ray tube 1 to irradiate the movable calibration plate 24 with an X-ray beam and causes the detector 7 to detect a reflected beam from the movable calibration plate 24.

The control unit acquires a signal representing the reflected beam detected at the second distance or tilt angle, and stores the acquired signal in its own memory or the like. Then, the control unit performs a multipoint calibration on the computation for the measurement of the measurement object 21 using the signal representing the second reflected beam and the signal representing a first reflected beam detected, with the movable calibration plate 24 secured at the first distance or tilt angle, and stored in the memory or the like.

The number of calibration points used to perform the multipoint calibration is not limited to the two described above, and three or more calibration points (three or more distances or tilt angles) may be set to determine the measurement value. When the movable calibration plate 25 is used in conjunction with the movable calibration plate 24 (as described below) to perform a multipoint calibration, the number of calibration points acquired from the movable calibration plate 24 may be one.

When a reflected beam from the movable calibration plate 25 is used in conjunction with the reflected beam from the movable calibration plate 24, as described above, to perform a multipoint calibration, the movable mechanism is operated, as in the case of the movable calibration plate 24, to move the movable calibration plate 25 to any position and secure it at any distance or tilt angle with respect to the X-ray tube 1 and the detector 7.

The control unit causes the detector 7 to detect a reflected beam from the movable calibration plate 25 in this state, stores a signal acquired from the detector 7 and representing the reflected beam in its own memory or the like, together with the signal representing the reflected beam from the movable calibration plate 24, and performs a multipoint calibration by appropriately using the signals in computation for the measurement object 21.

The movable calibration plate 25 illustrated in Fig. 4 is formed thicker than the movable calibration plate 24. It is particularly suited for calibration (multipoint calibration) of computation for determining the thickness of the measurement object 21 to use a signal representing the reflected beam from the movable calibration plate 25, in conjunction with a signal representing the reflected beam from the movable calibration plate 24, in a multipoint calibration.

When the movable calibration plate 25 is used in conjunction with the movable calibration plate 24, the control unit sets, for the movable calibration plate 25, one or more positions (i.e., distances or tilt angles described above) for reflection of an X-ray beam and acquires signals representing a plurality of reflected beams required for a multipoint calibration.

### (Fourth Embodiment)

Fig. 5 is a diagram schematically illustrating a configuration of an measurement device using X-ray reflection according to a fourth embodiment of the present invention. This diagram is to show, as in Figs. 1 to 4, the X-ray tube 1 and the detector 7 of the measurement device using X-ray reflection are placed near the measurement object 21.

The measurement device using X-ray reflection illustrated in Fig. 5 has the same configuration as that illustrated in Fig. 1, except that it includes a moving mechanism (not shown) that moves the calibration plate 22 of the measurement device using X-ray reflection illustrated in Fig. 1. An overlapping description of the same components as those of the measurement device using X-ray reflection illustrated in Fig. 1 will be omitted here.

The moving mechanism that moves the calibration plate 22 illustrated in Fig. 5 is configured to move the calibration plate 22 parallel to the circular plane of the peripheral circle 12, and also to move the calibration plate 22 by a predetermined amount (predetermined distance) in accordance with a control signal output from the control unit. That is, the moving mechanism is configured to secure the orientation of the calibration plate 22 in such a manner as to allow the calibration plate 22 to face the X-ray irradiation region of the X-ray tube 1 and the X-ray detection region of the detector 7, and is also configured to change and adjust the distance by which the calibration plate 22 is spaced from the above-described regions of the X-ray tube 1 and the detector 7.

The control unit included in the measurement device using X-ray reflection illustrated in Fig. 5 sets a plurality of distances between the calibration plate 22 and the X-ray irradiation region of the X-ray tube 1 and the X-ray detection region of the detector 7, in accordance with the surface or internal structure of the measurement object 21.

The control unit controls the moving mechanism in such a manner that the distance between the calibration plate 22 and the X-ray irradiation region of the X-ray tube 1 and the X-ray detection region of the detector 7 is a first distance of the set distances, secures the calibration plate 22 at the first distance, causes the X-ray tube 1 to irradiate the calibration plate 22 with an X-ray beam, and causes the detector 7 to detect a reflected beam from the calibration plate 22. The control unit stores, in its own memory or the like, a signal acquired from the detector 7 and representing the reflected beam from the calibration plate 22 secured at the first distance.

Then, the control unit controls the moving mechanism to move the calibration plate 22 and secure it at a second distance of the set distances. With the calibration plate 22 secured at the second distance, the control unit causes the X-ray tube 1 to irradiate the calibration plate 22 with an X-ray beam, and causes the detector 7 to detect a reflected beam from the calibration plate 22.

After acquiring a signal representing the reflected beam detected at the second distance, the control unit performs a multipoint calibration on the computation for the measurement of the measurement object 21 using the signal representing the reflected beam detected at the second distance and the signal stored in the memory or the like and representing the reflected beam from the calibration plate 22 secured at the first distance.

The number of calibration points used to perform the multipoint calibration is not limited to the two described above, and three or more calibration points (three or more distances) may be set to determine the measurement value.

### (Fifth Embodiment)

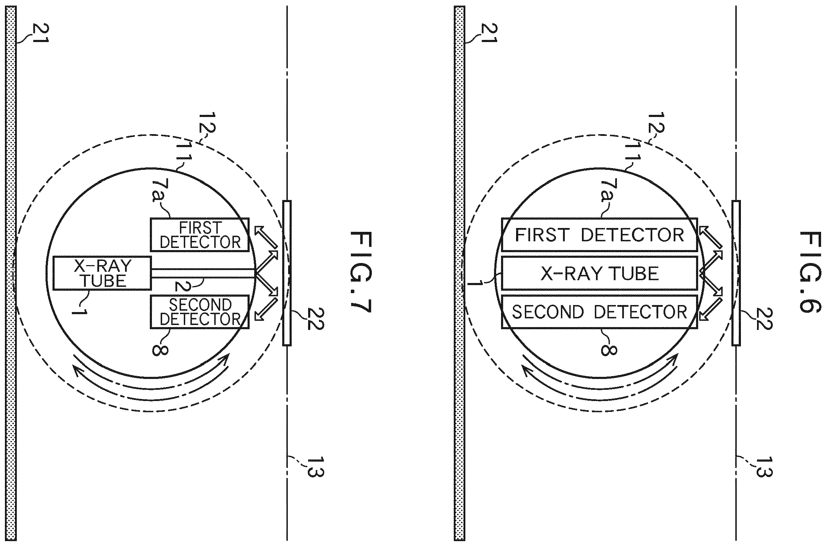

Fig. 6 is a diagram schematically illustrating a configuration of a measurement device using X-ray reflection according to a fifth embodiment of the present invention. This diagram is to show that, as in Figs. 1 to 5, the X-ray tube 1 (X-ray irradiation unit), a first detector 7a (first detection unit), and a second detector 8 (second detection unit) of the measurement device using X-ray reflection according to the fifth embodiment are placed near the measurement object 21.

The measurement device using X-ray reflection illustrated in Fig. 6 includes the first detector 7a and the second detector 8 arranged on both sides of the X-ray tube 1, and is configured in such a manner that the rotational plane 11 emerges when the X-ray tube 1, the first detector 7a, and the second detector 8 are rotated together by drive of the rotational driving unit (not shown). Otherwise, the measurement device using X-ray reflection illustrated in Fig. 6 has the same configuration as that illustrated in Fig. 1.

Note that the X-ray tube 1 and the detector 7 included in the measurement device using X-ray reflection illustrated in any of Figs. 3 to 5 may be replaced by the first detector 7a, the X-ray tube 1, and the second detector 8 illustrated in Fig. 6.

The X-ray tube 1 illustrated in Fig. 6 is configured to output, for example, X-ray beams of the same wavelength in two directions with similar intensities.

Specifically, the X-ray tube 1 is configured to allow X-ray beams to enter the calibration plate 22 or measurement object 21 on the circumference of the peripheral circle 12 at a predetermined incident angle, and is also configured to emit X-ray beams to the calibration plate 22 or measurement object 21 in such a manner as to allow scattered waves to reach the detectors in two directions.

The X-ray tube 1 illustrated in Fig. 6 is also configured to emit X-ray beams in two directions in such a manner that they are reflected by different regions of the calibration plate 22 or measurement object 21 and that one reflected beam (part of Compton-scattered beam) enters the first detector 7a and the other reflected beam (another part of Compton-scattered beam) enters the second detector 8.

The control unit (not shown) of the measurement device using X-ray reflection including the first detector 7a and the second detector 8 determines the measurement value on the measurement object 21 by computation using a signal output from the first detector 7a and representing the one reflected beam and a signal output from the second detector 8 and representing the other reflected beam.

Specifically, the control unit controls the rotational driving unit to rotate the first detector 7a, the X-ray tube 1, and the second detector 8 in such a manner as to allow their X-ray irradiation and detection regions to face, for example, the measurement object 21.

In this state, the control unit causes the X-ray tube 1 to emit X-ray beams in such a manner that they scatter in two directions and reflect off the measured regions of the measurement object 21 in different directions.

One reflected beam reflected at one region of the measurement object 21 is detected, for example, by the first detector 7a, and the other reflected beam reflected at the other region of the measurement object 21 is detected by the second detector 8.

The control unit acquires a signal output from the first detector 7a and representing the one reflected beam and a signal output from the second detector 8 and representing the other reflected beam. Then, as signals representing the reflected beams from the measurement object 21, the control unit stores the acquired signals in its own memory or the like.

The control unit controls the rotational driving unit to rotate the first detector 7a, the X-ray tube 1, and the second detector 8 in such a manner as to allow their X-ray irradiation and detection regions to face the calibration plate 22.

In this state, the control unit causes the X-ray tube 1 to emit X-ray beams in two directions in such a manner as to allow the X-ray beams to reflect off two different regions of the calibration plate 22.

One reflected beam reflected at one region of the calibration plate 22 is detected, for example, by the first detector 7a, and the other reflected beam reflected at the other region of the calibration plate 22 is detected by the second detector 8.

The order in which the reflected beams from the measurement object 21 are detected, the order in which the reflected beams from the calibration plate 22 are detected, and the order in which the measurement object 21 and the calibration plate 22 are measured, are not limited to those described above.

The control unit acquires a signal output from the first detector 7a and representing the one reflected beam from the calibration plate 22 and a signal output from the second detector 8 and representing the other reflected beam from the calibration plate 22. As signals representing the reflected beams from the calibration plate 22, the control unit stores the acquired signals in its own memory or the like. Then, the control unit performs a computation to determine a measurement value using the signals representing the reflected beams from the measurement object 21 and stored in the memory.

This computation involves using the signal representing the one reflected beam from the measurement object 21 and the signal representing the other reflected beam from the measurement object 21 to determine the measurement value. Determining the measurement value involves a calibration process which uses the signal representing the one reflected beam from the calibration plate 22 and the signal representing the other reflected beam from the calibration plate 22.

### (Sixth Embodiment)

Fig. 7 is a diagram schematically illustrating a configuration of a measurement device using X-ray reflection according to a sixth embodiment of the present invention. Fig. 7 illustrates an exemplary configuration in which the X-ray tube 1 illustrated in Fig. 6 is provided with an irradiation guide 2. Except for the irradiation guide 2, the measurement device using X-ray reflection illustrated in Fig. 7 is configured and operates in the same manner as that in Fig. 6. An overlapping description of the same configuration and operation as those illustrated in Fig. 6 will be omitted here.

Any of various absorptive or reflective materials may be used to form the irradiation guide 2, and the irradiation guide 2 of any of various shapes may be used, depending on the desired type of irradiation. For example, the irradiation guide 2 formed to either diverge or converge the emitted X-ray beam may be used. The irradiation guide 2 may be positioned at an angle to irradiate the measurement object 21.

The measurement device using X-ray reflection illustrated in any of Figs. 1 to 5 may include the irradiation guide 2 to direct an X-ray beam emitted from the X-ray tube 1 in a predetermined direction.

In the measurement devices using X-ray reflection according to the first to sixth embodiments described above, an X-ray beam output from the X-ray tube 1 is set to 30 keV or less. This causes a significant difference in absorption coefficient between a low atomic number material, such as hydrogen or lithium, and a high atomic number material. Using a low atomic number material with a low absorption coefficient produces more Compton scattering, and causes the occurrence of more Compton scattering toward the irradiation side than in other directions. Therefore, by detecting the reflected beam of the X-ray beam (i.e., part of Compton-scattered beam), it is possible to measure the thickness of the measurement object 21 and the moisture content in the measurement object 21.

When the measurement object 21 is of such a material as a substance mixed with lithium as a dominant component, the measurement device using X-ray reflection can perform component analysis on the measurement object 21. When a material, such as lithium, is applied to the measurement object 21 made of another material, the measurement device using X-ray reflection can measure the amount of material applied. The measurement device using X-ray reflection can also measure paper or olefinic films with high accuracy.

Since non-contact thickness measurement is possible, the measurement device using X-ray reflection can measure the thickness of an applied coating during the application process. In the process of forming a multilayer coating structure, the measurement device using X-ray reflection can detect intermediate layers of different properties.

During pickling of board members, the measurement device using X-ray reflection can be used to manage the board thickness. In manufacture of damping steel plates, the thicknesses of intermediate layers and the coating thickness of coated steel plates can be easily managed with the measurement device using X-ray reflection according to the present invention.

Also, since non-contact thickness measurement is possible, the measurement device using X-ray reflection can accurately measure, for example, the sheet or plate thickness even if components are prone to be contaminated by adhesion of flying paper materials thereto, as in the case of wet parts in a paper-forming process, or even if the space for installing the measurement device and the like is limited.

It is also possible to measure, with high accuracy, the moisture content in powder or granular material, such as gravel, sand, or coal, which is being conveyed by a conveying device, such as a conveyer.

When the measurement device using X-ray reflection is combined, for example, with a scanner to perform measurement, it is possible to successively carry out non-contact thickness measurement, moisture measurement, component analysis, and the like.

The present invention can be used in manufacturing (e.g., production of flour, tea, chemicals, paper, paper pulp, iron and steel, and non-ferrous metals), construction (e.g., production of building materials, construction of concrete plants, and civil engineering), and agriculture.

In agriculture, the present invention can be used for component analysis of cereal grains when applied to measurement devices equipped only with an X-ray source, or to composite measurement devices equipped with an X-ray source and a γ-ray source.

For paper, paper pulp, films, boards, and other products having a surface, and also for blocks of materials, the present invention can be used for measurement of moisture content, thickness measurement, measurement of the amount of coating applied thereto, and component analysis of coating agents.

The present invention can also be used to measure moisture content in powder and granular materials such as sand and flour, tea leaves, wood chips, and other wood materials.

## Claims

1. A measurement device using X-ray reflection comprising:
an X-ray irradiation unit configured to emit an X-ray beam;
an X-ray detection unit configured to detect a reflected beam of the X-ray beam and output a signal representing the reflected beam;
a rotational driving unit configured to rotate the X-ray irradiation unit and the X-ray detection unit;
a calibration plate disposed at a predetermined distance from the X-ray irradiation unit and the X-ray detection unit and configured to reflect the X-ray beam emitted from the X-ray irradiation unit toward the X-ray detection unit; and
a control unit configured to control an operation of the X-ray irradiation unit and an operation of the rotational driving unit, acquire the signal representing the reflected beam detected by the X-ray detection unit, and perform a predetermined computation,
wherein the control unit
controls the rotational driving unit to direct the X-ray irradiation unit and the X-ray detection unit toward a measurement object, causes the X-ray detection unit to detect a reflected beam of an X-ray beam emitted from the X-ray irradiation unit toward the measurement object,
directs the X-ray irradiation unit and the X-ray detection unit toward the calibration plate, causes the X-ray detection unit to detect a reflected beam of an X-ray beam emitted from the X-ray irradiation unit toward the calibration plate, and
determines a measurement value on the measurement object by a computation using a signal representing the reflected beam from the measurement object and a signal representing the reflected beam from the calibration plate.

2. The measurement device using X-ray reflection according to Claim 1, wherein the calibration plate is composed of
a first calibration plate disposed along a rotational trajectory of the X-ray irradiation unit and the X-ray detection unit, and
a second calibration plate disposed along the rotational trajectory of the X-ray irradiation unit and the X-ray detection unit, spaced from the first calibration plate, and formed of a material having an X-ray reflectivity different from the first calibration plate; and
the control unit performs a multipoint calibration on the computation for the signal representing the reflected beam from the measurement object, the multipoint calibration using a signal acquired from the X-ray detection unit and representing a reflected beam from the first calibration plate and a signal acquired from the X-ray detection unit and representing a reflected beam from the second calibration plate.

3. The measurement device using X-ray reflection according to Claim 1, further comprising a movable mechanism configured to rotate or translate a plurality of calibration plates in accordance with control by the control unit,
wherein the control unit acquires, from the X-ray detection unit, signals representing reflected beams from the plurality of calibration plates moved by controlling the movable mechanism, and performs a multipoint calibration on the computation using the signal representing the reflected beam from the measurement object.

4. The measurement device using X-ray reflection according to Claim 1, further comprising a moving mechanism configured to move the calibration plate in accordance with control by the control unit to change a distance between the calibration plate and the X-ray irradiation unit and the X-ray detection unit,
wherein the control unit controls the moving mechanism to adjust the distance between the calibration plate and the X-ray irradiation unit and the X-ray detection unit in such a manner that a signal representing a reflected beam suitable for the computation is output from the X-ray detection unit.

5. The measurement device using X-ray reflection according to any one of Claims 1 to 4, wherein the X-ray irradiation unit outputs an X-ray beam with 30 keV or less.

6. The measurement device using X-ray reflection according to any one of Claims 1 to 5, wherein
the X-ray detection unit includes a first detection unit and a second detection unit arranged on both sides of an X-ray irradiation region of the X-ray irradiation unit;
the X-ray irradiation unit emits X-ray beams in two directions to allow reflected beams from the measurement object or the calibration plate to enter the first detection unit and the second detection unit; and
the control unit determines a measurement value on the measurement object using a signal output from the first detection unit and representing one reflected beam and a signal output from the second detection unit and representing the other reflected beam.

7. The measurement device using X-ray reflection according to any one of Claims 1 to 6, further comprising an irradiation guide configured to guide an X-ray beam emitted from the X-ray irradiation unit in a predetermined direction.
